# EUROPÄISCHE PATENTANMELDUNG

(11) **EP 1 197 700 A2**
(43) Veröffentlichungstag der Anmeldung: **17.04.2002**
(21) Anmeldenummer: 01118013.0
(22) Anmeldetag: 25.07.2001
(51) Int. Cl.: F16L 11/12

(54) **Schlauch, insbesondere für den Sanitärbereich**

(30) Priorität: 11.10.2000 DE 10054670
(71) Anmelder: Kludi Armaturen Scheffer Vertriebs- und Verwaltungs oHG, 58706 Menden (DE)
(72) Erfinder: Katzer, Dieter, 49401 Damme (DE); Kraus, Thomas, 58706 Menden (DE)
(74) Vertreter: COHAUSZ HANNIG DAWIDOWICZ & PARTNER

(57) **Zusammenfassung**

Die Erfindung betrifft einen Schlauch, insbesondere für den Sanitärbereich mit einer gefärbten und/oder metallisierten Oberfläche, wobei auf der Außenseite eine gefärbte und/oder metallbedampfte Dekorfolie aus Kunststoff oder Silikon aufgeklebt oder aufextrudiert ist.

## Beschreibung

Die Erfindung betrifft einen Schlauch, insbesondere für den Sanitärbereich mit einer gefärbten und/oder metallisierten Oberfläche.

Es ist aus der EP 685 676 bekannt, eine metallisierte Heißprägefolie auf die Außenseite eines Brauseschlauches aufzubringen. Dies ist verhältnismäßig arbeits- und energieaufwendig.

Aufgabe der Erfindung ist es, einen Kunststoffschlauch, insbesondere einen Kunststoffbrauseschlauch bei geringem Energiebedarf außen mit einer Färbung insbesondere mit einer Metallisierung zu versehen, und hierbei einen ausreichenden Halt zwischen Schlauch und Außenfläche zu schaffen.

Diese Aufgabe wird erfindungsgemäß dadurch gelöst, dass auf der Außenseite eine gefärbte und/oder metallbedampfte Dekorfolie aus Kunststoff oder Silikon aufgeklebt oder aufextrudiert ist.

Statt einer aufwendigen Heißprägefolie kommt eine Folie mit Metallbedampfung zum Einsatz, die über eine Schutzfolie verfügen kann. Auf den Schlauch wird Kleber aufgetragen und die metallbedampfte Folie aufgeklebt oder aufextrudiert. Die Zugspannung der Folie genügt, um eine ausreichende Anpresskraft zwischen Folie und Schlauch zu erzeugen. Ein thermischer Prozeß zum Aufschmelzen eines Klebers wie bei Heißprägefolien üblich entfällt. Die gesondert aufzubringende Druckkraft übernimmt bei dem beschriebenen Verfahren die Zugspannung der Folie.

Ziel der Erfindung ist es, den hohen Energiebedarf bei der Herstellung eines solchen Schlauches mit Metalleffektoberfläche zu reduzieren und das Verfahren zu vereinfachen und damit prozeßsicherer zu gestalten.

Vorteilhafte Ausgestaltungen der Erfindung sind in den Unteransprüchen aufgeführt.

Ausführungsbeispiele der Erfindung werden im folgenden näher beschrieben.

Kunststoffschläuche werden im Sanitärbereich, insbesondere als Brauseschläuche häufig verwendet. Um der Außenseite des Kunststoffschlauches ein metallisches Äußeres zu geben, wird auf die Außenseite des Schlauches eine gefärbte und/oder metallbedampfte Dekorfolie aus Kunststoff oder Silikon aufgeklebt oder aufextrudiert.

Die Dekorfolie bedeckt die gesamte Oberfläche des Schlauches. Hierbei kann die Dekorfolie von einer Schutzschicht mindestens teilweise überzogen sein, die vorzugsweise durchsichtig oder durchscheinend ist. Die Schutzschicht kann aus einer extrudierten Kunststoffschicht bestehen.

Der Innenschlauch ist als im wesentlichen druckfester Trägerschlauch ausgebildet, der mit Dekorfolie umgeben ist, wobei die Verstärkung vorzugsweise im Trägerschlauch angeordnet ist. Der Schlauch besteht aus einem elastomeren Material, insbesondere aus Gummi oder Silikon. Ferner weist der Schlauch an seinen Enden Anschlußteile zur dichten Montage auf.

## Patentansprüche

1. Schlauch, insbesondere für den Sanitärbereich mit einer gefärbten und/oder metallisierten Oberfläche, **dadurch gekennzeichnet, dass** auf der Außenseite eine gefärbte und/oder metallbedampfte Dekorfolie aus Kunststoff oder Silikon aufgeklebt oder aufextrudiert ist.

2. Schlauch nach Anspruch 1, **dadurch gekennzeichnet, dass** die Dekorfolie die gesamte Oberfläche des Schlauches bedeckt.

3. Schlauch nach Anspruch 1 oder 2, **dadurch gekennzeichnet, dass** die Dekorfolie mit einer Schutzschicht mindestens teilweise überzogen ist.

4. Schlauch nach einem der vorherigen Ansprüche, **dadurch gekennzeichnet, dass** die Dekorfolie mit einer Schutzschicht überzogen ist, die mindestens teilsweise durchsichtig oder durchscheinend ist.

5. Schlauch nach Anspruch 4, **dadurch gekennzeichnet, dass** die Schutzschicht aus einer extrudierten Kunststoffschicht besteht.

6. Schlauch nach einem der vorherigen Ansprüche, **dadurch gekennzeichnet, dass** der Innenschlauch als im wesentlichen druckfester Trägerschlauch ausgebildet ist, der mit einer Dekorfolie umgeben ist, wobei die Verstärkung vorzugsweise im Trägerschlauch angeordnet ist.

7. Schlauch nach einem der vorherigen Ansprüche, **dadurch gekennzeichnet, dass** der Schlauch ein elastomeres Material, insbesondere Gummi oder Silikon aufweist.

8. Schlauch nach einem der vorherigen Ansprüche, **dadurch gekennzeichnet, dass** der Schlauch an seinen Enden Anschlußteile zur dichten Montage aufweist.

9. Verfahren nach Anspruch 7 oder 8, **dadurch gekennzeichnet, dass** die Schutzschicht vollständig die Dekorschicht des Schlauches bedeckt.

10. Verfahren nach einem der Ansprüche 7 bis 9, **dadurch gekennzeichnet, dass** die Schutzschicht mindestens teilweise durchsichtig ist und den Blick zur Dekorschicht freigibt.

11. Verfahren nach einem der Ansprüche 7 bis 10, **dadurch gekennzeichnet, dass** die Schutzschicht teilweise selbst Dekorelemente enthält und die Dekorschicht vollständig bedeckt.

12. Kunststofffschlauch, insbesondere für den Sanitärbereich mit einer metallisierten Oberfläche, **dadurch gekennzeichnet, dass** die Metallisierung direkt auf die Außenseite des Schlauches aufgebracht ist.
